# EUROPÄISCHE PATENTSCHRIFT

(11) **EP 0 869 287 B1**
(45) Veröffentlichungstag und Bekanntmachung des Hinweises auf die Patenterteilung: **16.10.2002**
(21) Anmeldenummer: 98105589.0
(22) Anmeldetag: 27.03.1998
(51) Int. Cl.: F16B 25/00

(54) **Selbtlochendes und gewindeformendes Verbindungselement**
Self-piercing and self-threading fastening element
Elément de fixation autopoinçonneur et autotaraudeur

(30) Priorität: 03.04.1997 DE 29705916 U
(43) Veröffentlichungstag der Anmeldung: 07.10.1998
(73) Patentinhaber: A-Z Ausrüstung und Zubehör GmbH & Co. KG, 45525 Hattingen (DE)
(72) Erfinder: Dicke, Robert, D-58256 Ennepetal (DE)
(74) Vertreter: Patentanwälte Dr. Solf & Zapf

(56) Entgegenhaltungen:
- DE-U- 8 905 189
- GB-A- 316 627
- US-A- 3 246 556

## Beschreibung

Die vorliegende Erfindung betrifft ein selbstlochendes und gewindeformendes Verbindungselement gemäß den Oberbegriff des Anspruchs 1.

Ein ähnliches, selbstlochendes und gewindeformendes Verbindungselement ist aus der DE 33 35 092 A1 bekannt. Es dient zum unmittelbaren Einschrauben in Weichwerkstoffe, wie vor allem Holzwerkstoffe aller Art, und zwar ohne vorhergehendes Vorbohren eines Kernloches. Die Schraube wird direkt in das Material eingeschraubt, wobei ein Material-Verdrängungseffekt ohne Spanbildung erreicht wird. Die Schraube sitzt dann einschließlich der Gewindespitze in dem Werkstoff, so daß das gesamte Gewinde bis zur Spitze an der Haltefunktion teilnimmt und deshalb hohe Lösemomente und Ausreißkräfte bzw. -momente erreicht werden. Die bekannte Schraube weist dabei durch eine wellenförmige Ausgestaltung der Gewindekante ein reduziertes Eindrehmoment auf, wobei die Gewindespitze durch das bis zum spitzen Ende verlaufende Gewinde als eine Art reibendes Werkzeug wirkt. Diese Schraube hat sich in der Praxis sehr gut bewährt.

Auch die DE 195 32 874 A1 beschreibt ein Verbindungselement, wobei zusätzlich im Bereich der Spitze an deren Umfangsfläche sich mindestens ein Reibkantenbereich in Schraubenlängsrichtung zumindest über eine Teillänge der Schraubenspitze erstreckt. Der Reibbereich hat eine geringfügige spanende Wirkung.

Die US-A-3 246 556 beschreibt ein Verbindungselement der eingang genanten Art insbesondere eine gewindeformende Schraube für dünne Blechmaterialien. Dazu besteht diese bekannte Schraube aus zwei Abschnitten mit grundsätzlich unterschiedlicher Ausgestaltung und Funktion, und zwar aus einem end- bzw. spitzenseitigen Gewindeformabschnitt und einem sich daran anschließenden Halteabschnitt. Der Halteabschnitt besteht aus einem zylindrischen Schaft mit einem kreisförmig und schraubenlinienförmig verlaufenden Gewinde. Der Gewindeformabschnitt besitzt demgegenüber einen gleichseitig dreieckigen Querschnitt, wobei in diesem Bereich auch die äußere Gewindekante einen entsprechend dreieckigen Verlauf aufweist. Der Gewindeformabschnitt dient dazu, in einem vorgebohrten Kernloch eines dünnen Blechmaterials mit relativ geringem. Einschraubmoment spanlos ein Gewinde zu formen, in dem nachfolgend nur ein Teil des Gewindes des Halteabschnittes sitzt. Der Gewindeformabschnitt trägt somit nicht zur Haltefunktion bei, sondern das Löse- und Ausreißmoment wird ausschließlich von dem Halteabschnitt bestimmt. Eine Verwendung für Holz- und Kunststoffmaterialien sowie ein Selbstlochen durch die bekannten Schraube sind der US-A-3 246 556 nicht zu entnehmen.

Der vorliegende Erfindung liegt die Aufgabe zugrunde, ein Verbindungselement der gattungsgemäßen Art zu schaffen, das sich besonders gut zum direkten Einschrauben in Weichstoffe, wie Holz, Spanplatten, Schichtwerkstoffe und dergleichen, ohne Vorbohren eignet, wobei ein geringes Anzugsmoment bei hohem Lose- und Ausreißmoment erreicht wird.

Erfindungsgemäß wird dies durch die Merkmale des Kennzeichnenden Teils des Anspruchs 1 erreicht.

Bei dem konvexen polygonalen Querschnitt kann es sich dabei um einen drei-, vier- oder fünfeckigen Querschnitt handeln, der in bevorzugter Ausgestaltung vor allem konvex gewölbte Seitenflächen und/oder gegebenenfalls abgerundete Ecken aufweist. Dabei ist es zweckmäßig, wenn sich der Bereich mit dem im wesentlichen polygonalen Querschnitt jedenfalls bis zu dem spitzen Ende der Gewindespitze erstreckt, und zwar mit bis zum Ende gegen Null gehender Flächengröße.

Durch die erfindungsgemäße Ausgestaltung wird beim Einschrauben eine Spanbildung praktisch völlig vermieden. Vielmehr beruht die selbstlochende Wirkung des erfindungsgemäßen Verbindungselementes darauf, daß sich die Gewindespitze aufgrund ihres polygonförmigen Kern-Querschnittes in das Material hineindrückt, indem eine gute, radiale Verdrängungswirkung durch bei Rotation auf- und abschwellende Momente erreicht wird. Dennoch wird ein hohes Lösemoment (hohe Haltekraft) erreicht, weil nach dem Einschrauben das verdrängte Weichmaterial sich praktisch an den polygonalen Querschnitt anschmiegt, so daß im Grunde schon ein Formschluß oder zumindest Kraftformschluß erreicht wird. Aufgrund der durchgehend kreisförmig bzw. spiralförmig verlaufenden Gewindekante wird im eingeschraubten Zustand des dann einschließlich der Gewindespitze im Material sitzenden Gewindes auch ein hohes Ausreißmoment bzw. eine hohe Ausreißkraft gewährleistet. Dies bedeutet, daß das erfindungsgemäße Verbindungselement praktisch nur einen Halteabschnitt aufweist, da auch die Gewindespitze an der Haltefunktion teilnimmt, wobei aber durch die besondere Ausgestaltung der Gewindespitze dennoch auch ein vorteilhaft geringes Eindrehmoment gewährleistet ist.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll im folgenden die Erfindung näher erläutert werden. Dabei zeigen:
- Fig. 1: eine stark vergrößerte Seitenansicht eines spitzenseitigen Teils eines erfindungsgemäßen Verbindungselementes,
- Fig. 2: einen Querschnitt in der Ebene II-II gemäß Fig. 1,
- Fig. 3: einen Querschnitt in der Ebene III-III gemäß Fig. 1 und
- Fig. 4: einen Querschnitt in der Ebene IV-IV gemäß Fig.1.

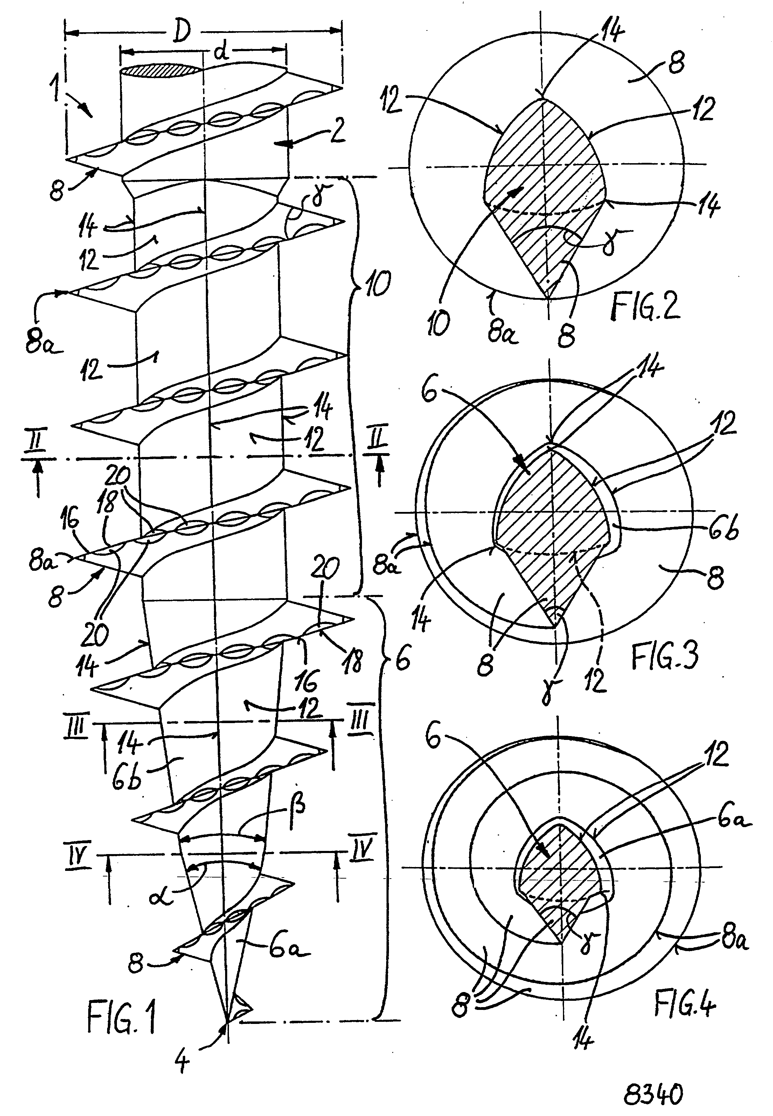

Das beispielhaft in der Zeichnung veranschaulichte Verbindungselement kann als Schraube 1 mit einem Gewindeschaft 2, einer sich bis zu einem spitzen Ende 4 im Querschnitt verjüngenden Gewindespitze 6 sowie einem in Fig. 1 nicht dargestellten Schraubenkopf ausgebildet sein, der einen Schlitz oder Kreuzschlitz oder dergleichen Angriff für einen Schraubendreher aufweisen kann. Zumindest über einen Teil des Gewindeschaftes 2 sowie über die Gewindespitze 6 bis hin zum Spitzenende 4 verläuft ein ein- oder mehrgängiges Gewinde 8. Im dargestellten Ausführungsbeispiel handelt es sich um ein eingängiges Gewinde, welches als schraubenlinienförmig verlaufende Erhebung auf dem Schaft 2 und der Spitze 6 ausgebildet ist. Der Gewindeschaft 2 ist im wesentlichen zylindrisch ausgebildet, d.h. er weist einen über die Länge im wesentlichen konstanten Kern-Durchmesser auf. Die Spitze 6 kann sich unmittelbar an den Schaft 2 anschließen; im dargestellten, bevorzugten Ausführungsbeispiel der Erfindung ist jedoch axial zwischen dem Gewindeschaft 2 und der Gewindespitze 6 ein Übergangsabschnitt 10 angeordnet, der vorzugsweise einen über seine Länge hinweg konstanten Querschnitt aufweist.

Erfindungsgemäß ist nun vorgesehen, daß die Gewindespitze 6 zumindest in einem Teilbereich ihrer axialen Länge einen im wesentlichen polygonalen Kern-Querschnitt aufweist. Gemäß Fig. 3 und 4 handelt es sich bevorzugt um einen im wesentlichen dreieckigen Querschnitt mit Seitenflächen 12 und Ecken 14, wobei vorzugsweise zumindest die Seitenflächen 12 konvex gewölbt sind. Zweckmäßigerweise sind die Ecken 14 geringfügig abgerundet. Wie dargestellt handelt es sich bei dem Querschnitt speziell um die Grundform eines gleichseitigen (regelmäßigen) Dreiecks. Alternativ dazu liegen jedoch nahezu beliebige Polygonformen im Bereich der Erfindung, beispielsweise Vier- oder Fünfecke.

In dem bevorzugten Ausführungsbeispiel weist die Gewindespitze 6 eine Gesamtlänge von ca. 3 bis 4, insbesondere 3½, Gewindegängen (Ganghöhen) auf. Dabei ist es vorteilhaft, wenn die Gewindespitze 6 aus zwei Abschnitten 6a und 6b mit unterschiedlichen Spitzenwinkeln α und β besteht. Vorzugsweise ist hierbei der Spitzenwinkel α des das Spitzenende 4 aufweisenden Endabschnittes 6a größer als der Spitzenwinkel β des sich anschließenden Spitzenabschnittes 6b. Die Gesamtlänge der Gewindespitze 6 teilt sich hierbei vorzugsweise so auf, daß der Endabschnitt 6a eine Länge von ca. 1½ Gewindegängen und der sich anschließende Spitzenabschnitt 6b eine Länge von ca. 2 Gewindegängen aufweisen.

Was den bereits erwähnten, bevorzugten Übergangsabschnitt 10 betrifft, so entspricht dessen Querschnitt vorzugsweise dem Querschnitt im sich an den Übergangsabschnitt 10 anschließenden Bereich der Gewindespitze 6; siehe Fig. 2. Die Länge des Übergangsabschnittes 10 entspricht vorzugsweise etwa drei vollständigen Gewindegängen. Der Querschnitt des Übergangsabschnittes 10 definiert mit seinen Polygon-Ecken 14 zweckmäßigerweise einen Hüllkreis (nicht dargestellt), dessen Durchmesser kleiner/gleich, insbesondere aber etwa gleich, dem Durchmesser des zylindrischen Gewindeschaftes 2 ist.

Das als schraubenlinienförmig verlaufende Erhebung mit spitzem, etwa dreieckigem Querschnitt ausgebildete Gewinde 8 weist eine äußere Gewindekante 8a auf, die erfindungsgemäß grundsätzlich kreisförmig, also nicht analog zu dem polygonalen Kern-Querschnitt, verläuft, im Bereich der Gewindespitze 6 aufgrund der Spitzenwinkel α, β mit abnehmendem Radius spiralförmig (s. Fig. 3 und 4). Im Bereich des Gewindeschaftes 2 und gegebenenfalls des Übergangsabschnittes 10 verläuft die äußere Gewindekante 8a wegen der im wesentlichen konstanten Querschnitte mit konstantem Radius, also in der axialen Projektion gesehen kreisförmig (Fig. 2).

In der in Fig.1 veranschaulichten, bevorzugten Ausführungsform der Erfindung ist die Gewindekante 8a des Gewindes 8 zumindest im Bereich der Gewindespitze 6 - vorzugsweise aber auch in einem sich an die Gewindespitze 6 anschließenden Teilabschnitt des Schaftes 2 von insbesondere mindestens ein bis zwei vollständigen Gewindegängen - derart wellenförmig ausgebildet, daß eine Folge von Wellenbergen 16 und Wellentälern 18 (in radialer Richtung gesehen) vorhanden ist. Vorzugsweise sind im Bereich der Wellentäler 18 im Flankenbereich des Gewindes 8 axiale Vertiefungen 20 ausgebildet, und zwar auf einer Flanke oder - wie dargestellt - auf beiden Flanken des Gewindes 8. Diese - an sich bekannte - Ausgestaltung ist nur in Fig. 1, nicht aber in den Fig. 2 bis 4 veranschaulicht.

Es ist zudem vorteilhaft, wenn das Gewinde 8 bezüglich seiner radialen Höhe in Relation zu dem jeweiligen Kern-Querschnitt derart ausgelegt ist, daß sich jeweils zwischen dem Kern-Querschnitt d und dem zugehörigen Außendurchmesser D des Gewindes 8 ein Verhältnis von d = ca. 0,6 D ergibt. Im Gegensatz dazu gilt bei üblichen Holz- und Blechschrauben in der Regel d = mind. 0,7 · D. Schließlich besitzt das erfindungsgemäße Gewinde 8 auch ein spezielles Gewindeprofil mit einem Flankenwinkel γ im Bereich von 30° bis 40°, insbesondere etwa 35°, während übliche Normschrauben einen Flankenwinkel von 60° aufweisen. Es sei bemerkt, daß sich in den Fig. 2 bis 4 der Flankenwinkel γ jeweils etwas zu groß darstellt, weil ja das Gewindeprofil schräg zum schraubenlinienförmigen Verlauf des Gewindes 8 geschnitten ist.

## Patentansprüche

1. Selbstlochendes und gewindeformendes Verbindungselement, insbesondere Schraube (1), mit einem Gewindeschaft (2) und einer sich bis zu einem Spitzenende (4) verjüngenden Gewindespitze (6) sowie mit einem zumindest teilweise über den Gewindeschaft (2) und über die Gewindespitze (6) bis zum Spitzenende (4) als schraubenlinienförmige Erhebung verlaufenden, ein- oder mehrgängigen Gewinde (8), wobei die Gewindespitze (6) zumindest in einem Teilbereich ihrer axialen Länge einen als im Wesentlichen konvexes Polygon ausgebildeten Kern-Querschnitt aufweist und das Gewinde (8) mit einer äußeren Gewindekante (8a) ausgebildet ist, die - in axialer Projektion gesehen - im Bereich des Gewindeschaftes (2) mit konstantem Radius kreisförmig und über den Bereich der Gewindespitze (6) hinweg spiralförmig verläuft, **dadurch gekennzeichnet, dass** die Gewindekante (8a) - in axialer Projektion gesehen - über den Bereich der Gewindespitze (6) hinweg abweichend vom Formverlauf des polygonalen Kern- Qerschnitts mit kontinuierlich abnehmendem Radius verläuft.

2. Verbindungselement nach Anspruch 1,
**dadurch gekennzeichnet, daß** der polygonale, insbesonders im wesentlichen drei-, vieroder fünfeckige Querschnitt der Gewindespitze (6) konvex gewölbte Seitenflächen (12) und/oder abgerundete Ecken (14) aufweist.

3. Verbindungselement nach Anspruch 1 oder 2,
**dadurch gekennzeichnet, daß** sich der Bereich mit dem im wesentlichen polygonalen Querschnitt bis zu dem Spitzenende (4) der Gewindespitze (6) erstreckt, und zwar mit bis zum Ende (4) gegen Null gehender Flächengröße.

4. Verbindungselement nach einem der Ansprüche 1 bis 3,
**dadurch gekennzeichnet, daß** die Gewindespitze (6) aus zwei Abschnitten (6a, 6b) mit unterschiedlichen Spitzenwinkeln (α, β) besteht, wobei insbesondere der Spitzenwinkel (α) des das Spitzenende (4) aufweisenden Endabschnittes (6a) größer als der Spitzenwinkel (β) des sich anschließenden Spitzenabschnittes (6b) ist.

5. Verbindungselement nach einem der Ansprüche 1 bis 4,
**dadurch gekennzeichnet, daß** zwischen dem - insbesondere im wesentlichen zylindrischen - Gewindeschaft (2) und der Gewindespitze (6) ein Übergangsabschnitt (10) angeordnet ist, wobei der Übergangsabschnitt (10) einen über seine axiale Länge hinweg konstanten, insbesondere dem im wesentlichen polygonalen Querschnitt im sich anschließenden Bereich der Gewindespitze (6) entsprechenden Querschnitt aufweist.

6. Verbindungselement nach Anspruch 5,
**dadurch gekennzeichnet, daß** der Querschnitt des Übergangsabschnittes (10) mit seinen Polygon-Ecken (14) einen Hüllkreis definiert, dessen Durchmesser kleiner/gleich, insbesondere aber etwa gleich, dem Durchmesser des zylindrischen Gewindeschaftes (2) ist.

7. Verbindungselement nach Anspruch 5 oder 6,
**dadurch gekennzeichnet, daß** die äußere Gewindekante (8a) des Gewindes (8) im Bereich des Übergangsabschnittes (10) - in axialer Projektion gesehen - mit konstantem Radius kreisförmig verläuft.

8. Verbindungselement nach einem der Ansprüche 1 bis 7,
**dadurch gekennzeichnet, daß** die Gewindekante (8a) des Gewindes (8) zumindest im Bereich der Gewindespitze (6) - sowie vorzugsweise in einem sich an die Gewindespitze (6) anschließenden Abschnitt des Gewindeschaftes (2) von insbesondere mindestens etwa ein bis zwei vollständigen Gewindegängen derart wellenförmig ausgebildet ist, daß eine Folge von Wellenbergen (16) und Wellentälern (18) vorhanden ist, wobei im Bereich der Wellentäler (18) im Flankenbereich Vertiefungen (20) ausgebildet sind.

9. Verbindungselement nach einem der Ansprüche 1 bis 8,
**dadurch gekennzeichnet, daß** das Gewinde (8) einen Flankenwinkel (γ) im Bereich von 30° bis 40°, insbesondere etwa 35°, aufweist.

10. Verbindungselement nach einem der Ansprüche 1 bis 9,
**dadurch gekennzeichnet, daß** zwischen dem jeweiligen Kern-Querschnitt (d) und dem zugehörigen Gewinde-Außendurchmesser (D) ein Verhältnis (d : D) von etwa 0,6 besteht.

## Claims

1. Self-piercing and thread-forming connecting element, in particular a screw (1), having a threaded shank (2) and a threaded point (6) tapering to a point end (4), and also a single- or multi-start thread (8) running as a helical prominence at least partly over the threaded shank (2) and over the threaded point (6) up to the point end (4), the threaded point (6), at least in a section of its axial length, having a core cross section designed as an essentially convex polygon, and the thread (8) being formed with an outer thread edge (8a) which, as viewed in axial projection, runs in a circle with a constant radius in the region of the threaded shank (2) and spirally across the region of the threaded point (6), **characterized in that** the thread edge (8a), as viewed in axial projection, runs with continuously decreasing radius across the region of the threaded point (6) in such a way as to differ from the profile of the polygonal core cross section.

2. Connecting element according to Claim 1, **characterized in that** the polygonal, in particular essentially triangular, quadrilateral or pentagonal cross section of the threaded point (6) has convexly arched side surfaces (12) and/or rounded-off corners (14).

3. Connecting element according to Claim 1 or 2, **characterized in that** the region having the essentially polygonal cross section extends up to the point end (4) of the threaded point (6), to be precise with a surface area approaching zero towards the end (4).

4. Connecting element according to one of Claims 1 to 3, **characterized in that** the threaded point (6) consists of two sections (6a, 6b) having different point angles (α, β), in particular the point angle (α) of the end section (6a) having the point end (4) being greater than the point angle (β) of the adjoining point section (6b).

5. Connecting element according to one of the Claims 1 to 4, **characterized in that** a transition section (10) is arranged between the, in particular essentially cylindrical, threaded shank (2) and the threaded point (6), the transition section (10) having a cross section which is constant across its axial length and corresponds in particular to the essentially polygonal cross section in the adjoining region of the threaded point (6).

6. Connecting element according to Claim 5, **characterized in that** the cross section of the transition section (10), with its polygonal corners (14) , defines an envelope circle, the diameter of which is smaller than/equal to, but in particular approximately equal to, the diameter of the cylindrical threaded shank (2).

7. Connecting element according to Claim 5 or 6, **characterized in that** the outer thread edge (8a) of the thread (8) in the region of the transition section (10) - as viewed in axial projection - runs in a circle with a constant radius.

8. Connecting element according to one of Claims 1 to 7, **characterized in that** the thread edge (8a) of the thread (8) is of wavelike design at least in the region of the threaded point (6) - and preferably in a section of the threaded shank (2) adjoining the threaded point (6) of in particular at least one to two complete thread turns - in such a way that there is a sequence of wave crests (16) and wave troughs (18), recesses (20) being formed in the region of the wave troughs (18) in the flank region.

9. Connecting element according to one of Claims 1 to 8, **characterized in that** the thread (8) has a flank angle (γ) within the range of 30° to 40°, in particular about 35°.

10. Connecting element according to one of Claims 1 to 9, **characterized in that** there is a ratio (d ; D) of about 0.6 between the respective core cross section (d) and the associated thread outside diameter (D).

## Revendications

1. Elément d'assemblage auto-perforant et fileté, en particulier une vis (1) avec une tige filetée (2) et une extrémité de filetage (6) se rétrécissant jusqu'à une pointe (4) ainsi qu'avec un filetage simple ou multiple (8) s'étendant comme une élévation hélicoïdale au moins sur une partie de la tige filetée (2) et sur l'extrémité du filetage (6) jusqu'à la pointe (4), l'extrémité du filetage (6) présentant, au moins dans une partie de sa longueur axiale, une section de noyau en forme de polygone essentiellement convexe et le filetage (8) étant conçu avec une arête de filetage extérieure (8a) qui, quand on regarde en projection axiale, est de forme circulaire avec un rayon constant dans la zone de la tige filetée (2) et de forme hélicoïdale sur la zone de l'extrémité du filetage (6), **caractérisé en ce que** l'arête de filetage (8a) va, quand on regarde en projection axiale, en s'éloignant de la forme de la section de noyau polygonale avec un rayon diminuant en continu sur la zone de l'extrémité du filetage (6).

2. Elément d'assemblage selon la revendication 1, **caractérisé en ce que** la section polygonale, en particulier triangulaire, carrée ou pentagonale, de l'extrémité du filetage (6) présente des surfaces latérales bombées convexes (12) et/ou des angles arrondis (14).

3. Elément d'assemblage selon la revendication 1 ou la revendication 2, **caractérisé en ce que** la zone avec la section essentiellement polygonale s'étend jusqu'à la pointe (4) de l'extrémité du filetage (6), avec une surface tendant vers zéro jusqu'à la pointe (4).

4. Elément d'assemblage selon l'une quelconque des revendications 1 à 3, **caractérisé en ce que** l'extrémité du filetage (6) est constituée de deux segments (6a, 6b) avec des angles de pointe (α, β) différents, en particulier l'angle α du segment d'extrémité (6a) présentant la pointe (4) étant plus grand que l'angle β du segment d'extrémité (6b) lui faisant suite.

5. Elément d'assemblage selon l'une quelconque des revendications 1 à 4, **caractérisé en ce qu'**un segment de transition (10) est disposé entre la tige filetée (2), en particulier essentiellement cylindrique, et l'extrémité du filetage (6), ledit segment de transition (10) présentant une section constante sur sa longueur axiale, en particulier correspondant à la section essentiellement polygonale dans la zone de l'extrémité du filetage (6) lui faisant suite.

6. Elément d'assemblage selon la revendication 5, **caractérisé en ce que** la section du segment de transition (10) définit avec ses angles de polygone (14) un cercle enveloppant dont le diamètre est plus petit ou égal, en particulier à peu près égal au diamètre de la tige filetée cylindrique (2).

7. Elément d'assemblage selon la revendication 5 ou la revendication 6, **caractérisé en ce que** l'arête extérieure (8a) du filetage (8) s'étend, quand on regarde en projection axiale, en forme de cercle dans la zone du segment de transition (10) avec un rayon constant.

8. Elément d'assemblage selon l'une quelconque des revendications 1 à 7, **caractérisé en ce que** l'arête (8a) du filetage (8), au moins dans la zone de l'extrémité du filetage (6), ainsi que, de préférence, dans un segment de la tige filetée (2) faisant suite à l'extrémité du filetage (6), d'en particulier au moins un à deux pas complets, a une forme ondulée de telle sorte qu'on a une succession de crêtes (16) et de creux (18) d'ondes, des dépressions (20) étant formées dans la zone du flanc (20).

9. Elément d'assemblage selon l'une quelconque des revendications 1 à 8, **caractérisé en ce que** le filetage (8) présente un angle de flanc (γ) dans la plage de 30° à 40°, en particulier d'environ 35°.

10. Elément d'assemblage selon l'une quelconque des revendications 1 à 9, **caractérisé en ce qu'**un rapport (d : D) d'environ 0,6 existe à chaque fois entre la section du noyau (d) et le diamètre extérieur du filetage (D) correspondant.
